# FASCICULE DE BREVET EUROPEEN

(11) **EP 0 432 054 B1**
(45) Date de publication et mention de la délivrance du brevet: **12.10.1994**
(21) Numéro de dépôt: 90420477.3
(22) Date de dépôt: 06.11.1990
(51) Int. Cl.: H02H 3/00

(54) **Déclencheur électronique dont la face avant est constituée par un afficheur à écran plat**
Elektronischer Schutzschalter mit als Flachanzeige ausgebildeter Frontfläche
Electronic circuit breaker of which the front panel is constituted as a flat panel display

(30) Priorité: 16.11.1989 FR 8915155
(43) Date de publication de la demande: 12.06.1991
(73) Titulaire: MERLIN GERIN, F-38240 Meylan (FR)
(72) Inventeur: Fraisse, Didier, F-38050 Grénoble Cédex (FR)
(74) Mandataire: Jouvray, Marie-Andrée

(56) Documents cités:
- EP-A- 0 226 530
- EP-A- 0 232 654
- EP-A- 0 279 691
- US-A- 4 266 105
- US-A- 4 429 340
- US-A- 4 870 531
- PATENT ABSTRACTS OF JAPAN vol. 12, no. 166 (P-704)(3013), 19 mai 1988 & JP - A - 62280655

## Description

L'invention concerne un déclencheur électronique comportant un ensemble de traitement électronique, comportant un microprocesseur et au moins une mémoire vive secourue ou une mémoire morte programmable et effaçable électriquement, recevant des signaux de sortie de moyens de mesure du courant parcourant des conducteurs à protéger et destiné à produire un signal de déclenchement en cas de dépassement par lesdits signaux de paramètres de déclenchement prédéterminés, une face avant comportant des indications relatives au type de déclencheur, des moyens de signalisation d'un défaut, et un dispositif d'affichage destiné à afficher les paramètres de déclenchement.

Dans les déclencheurs électroniques de type connu, la face avant du déclencheur comporte au moins des moyens de signalisation d'un défaut, généralement sous forme d'un voyant lumineux, des moyens électromécaniques, potentiomètres, commutateurs ou touches, permettant de régler les seuils de déclenchement, et une étiquette sur laquelle sont imprimées les indications relatives au constructeur et au type de déclencheur. Dans certains déclencheurs un dispositif d'affichage est prévu pour l'affichage de valeurs mesurées et des paramètres de déclenchement (EP-A-0 232 654).

Le nombre d'étiquettes différentes pouvant être associées à un déclencheur peut être très élevé, de l'ordre d'une centaine, en raison du grand nombre d'options possibles.

L'invention a pour but une standardisation des déclencheurs, sans limiter le nombre d'options possibles et en éliminant si possible tout risque d'erreur d'adéquation entre l'étiquette disposée sur la face avant du déclencheur et les fonctions effectivement réalisées par le déclencheur.

Selon l'invention, ce but est atteint par le fait que la face avant du déclencheur est constituée par un dispositif d'affichage à écran plat, contrôlé par le microprocesseur et connecté à une batterie interne de manière à afficher en permanence diverses données contenues dans la mémoire et constituées à la fois au moins par des indications relatives au type de déclencheur, par les paramètres de déclenchement et par la signalisation d'un défaut, le déclencheur comportant des moyens de réception connectés au microprocesseur et destinés à coopérer avec des moyens d'émission d'un dispositif de télécommande comportant des moyens permettant de modifier à distance les paramètres de déclenchement contenus dans la mémoire.

Ainsi, l'étiquette et les dispositifs de signalisation de la face avant sont remplacés par un dispositif d'affichage à écran plat contrôlé par le microprocesseur du déclencheur. Ce dispositif d'affichage occupe de préférence la totalité de la face avant. Les informations affichées correspondent obligatoirement aux données de la mémoire qui sont prises en compte par le déclencheur lors du traitement des signaux. Un seul dispositif d'affichage, standard, remplace les diverses étiquettes nécessaires jusqu'ici pour personnaliser un déclencheur en fonction des diverses options possibles.

Le dispositif d'affichage est de préférence un afficheur à cristaux liquides.

L'utilisation d'une télécommande pour modifier les paramètres de déclenchement permet d'exclure tout élément électromécanique, potentiomètre, commutateur ou touche, de la face avant du déclencheur. On supprime ainsi l'essentiel des problèmes de décharges électrostatiques. L'ensemble de traitement peut alors être disposé sur une (ou plusieurs) carte du circuit imprimé qui, en l'absence de parties mécaniques, peut être recouverte de vernis, améliorant ainsi la réponse de l'ensemble aux contraintes climatiques. La suppression de ces éléments électromécaniques permet de plus un gain de volume important sur les cartes de circuit imprimé.

Selon un développement de l'invention, les indications relatives au type de déclencheur sont introduite dans la mémoire à distance au moyen d'un dispositif de télécommande spécifique, et de préférence ces indications ne sont pas modifiables ultérieurement, après leur introduction dans la mémoire.

D'autres avantages et caractéristiques ressortiront plus clairement de l'exposé qui va suivre de modes particuliers de réalisation de l'invention, donnés à titre d'exemples non limitatifs et représentés aux dessins annexés sur lesquels:

La figure 1 représente un schéma synoptique simplifié d'un déclencheur dans lequel l'invention peut être mise en oeuvre.

Les figures 2 et 5 représentent des modes particuliers de réalisation de la face avant du déclencheur selon la figure 1.

Les figures 3 et 4 illustrent des modes particuliers de réalisation de dispositifs de télécommande destinés à coopérer avec le déclencheur.

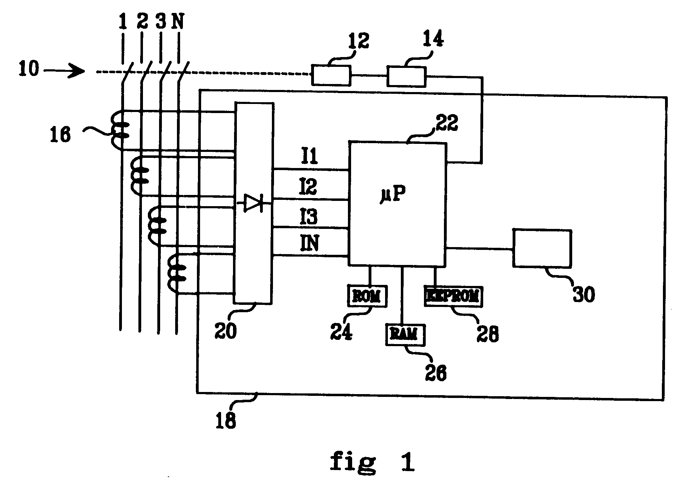

Sur la figure 1, un réseau de distribution électrique triphasé, comportant trois conducteurs de phase 1,2,3 et un conducteur de neutre N comporte un disjoncteur 10 susceptible d'interrompre le circuit en position d'ouverture. Le mécanisme 12 du disjoncteur 10 est piloté par un relais polarisé 14 de commande de déclenchement du disjoncteur en cas de surcharge ou de court-circuit. A chaque conducteur (1,2,3,N), est associé un transformateur de courant 16 qui délivre un signal analogique représentatif du courant parcourant le conducteur associé. Ces signaux sont appliqués au déclencheur 18 qui comporte un circuit de redressement et de mise en forme 20 dont les sorties I1,I2,I3 et IN sont appliquées à un ensemble électronique de traitement à microprocesseur 22 dont une sortie contrôle le relais polarisé 14. Le microprocesseur est connecté à divers auxiliaires (non représentés) nécessaires à son fonctionnement, et à au moins une mémoire morte (ROM) 24 et une mémoire vive (RAM) 26. Sur la figure 1 le microprocesseur est relié à une troisième mémoire 28, qui est une mémoire vive secourue ou, de préférence, une mémoire morte programmable et effaçable électriquement (EEPROM ou NOVRAM). Le microprocesseur est, de plus, connecté à un dispositif d'affichage 30.

Le déclencheur assure, de manière connue, diverses fonctions de protection lorsque un défaut ou une surcharge apparaissent dans le réseau de distribution à protéger.

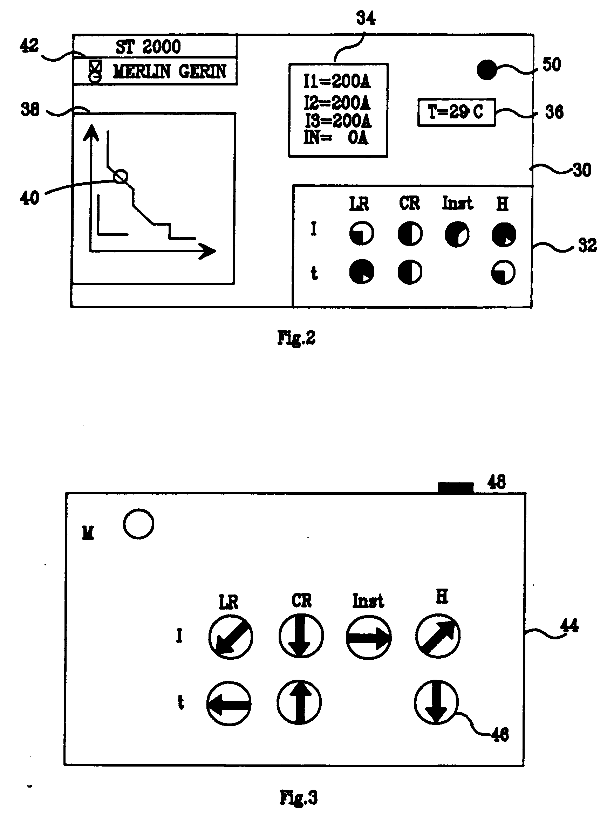

Comme représenté sur la figure 2, la face avant du déclencheur 18, disposée de manière à être vue par un utilisateur, est constituée par la face avant du dispositif d'affichage 30, ce dernier étant un afficheur du type à cristaux liquides.

Sur le dispositif d'affichage 30 sont affichées en permanence les informations relatives aux paramètres de déclenchement (zone 32), c'est-à-dire les seuils (I) et les temporisations (t) des diverses fonctions de déclenchement du déclencheur, par exemple les fonctions long retard (LR), court retard (CR), instantané (Inst) et homopolaire (H). Dans le mode de réalisation représenté sur la figure 2, ces informations sont représentées par une combinaison de signes alphanumériques (LR, CR, Inst, H, I, t) et des schémas de type analogique, sous forme de segments circulaires, correspondant à une représentation graphique de potentiomères ou de commutateurs.

D'autres zones, 34 et 36, du dispositif d'affichage peuvent servir à l'affichage de valeurs mesurées, par exemple des courants de phase (I1, I2, I3) et de neutre (IN) ainsi que de la température (T).

L'afficheur indique également un certain nombre d'informations représentatives du type du déclencheur. Sur la figure 2, ces informations sont à la fois de type alphanumérique (ST 2000, paramètres de la zone 32 correspondant aux fonctions effectivement réalisées par le déclencheur) et de type graphique comme les courbes de déclenchement (zone 38).

La signalisation d'un défaut est également réalisée par l'afficheur. Sur la figures 2, un point 40 situé sur la courbe de déclenchement long retard indique un déclenchement dû à un défaut long retard. Ce même point, par exemple en clignotant, peut être également utilisé pour signaler un dépassement du seuil long retard n'ayant pas encore conduit à un déclenchement.

Enfin, diverses informations relatives au constructeur, par exemple le logo et le nom de la société, sont également indiqués sur l'afficheur (zone 42).

La face avant du déclencheur 18 comporte ainsi, sur le dispositif d'affichage 30, toutes les informations concernant le déclencheur qui intéressent un utilisateur.

L'affichage des informations se fait sous le contrôle du microprocesseur, les diverses informations à afficher étant contenues dans la mémoire 28 (EEPROM). Si le déclencheur est un déclencheur à propre courant, c'est-à-dire alimenté par le réseau à protéger, il est prévu dans le déclencheur une pile ou une batterie auxiliaire de manière à conserver l'affichage même lorsque le disjoncteur est ouvert.

Les données affichées correspondant aux données mises en mémoire dans le déclencheur et utilisées par le microprocesseur pour réaliser les diverses fonctions de protection prévues dans un déclencheur particulier, il n'y a aucun risque d'erreur d'adéquation entre les informations affichées sur la face avant du déclencheur et les fonctions effectivement réalisées par le déclencheur. En particulier, il n'y a aucun risque que le type de déclencheur et les courbes de déclenchement ne correspondent pas au type de déclencheur réellement utilisé, alors qu'une telle erreur était possible dans les déclencheurs selon l'art antérieur où une étiquette était collée sur la face avant du déclencheur lors de sa fabrication.

Contrairement aux déclencheurs connus, la face avant du déclencheur ne comporte ni potentiomètre, ni commutateur, ni touche, permettant de modifier les paramètres de déclenchement.

Dans le mode de réalisation représenté sur les figures 2 et 3, une liaison infra-rouge permet de modifier les paramètres de déclenchement à partir d'un dispositif de télécommande 44. Le dispositif de télécommande 44 comporte une pluralité de potentiomètres 46 permettant de régler les divers paramètres de déclenchement. Ce dispositif est de préférence constitué par un boîtier standard comportant autant de potentiomètres, de commutateurs ou de touches, qu'il est nécessaire pour modifier les paramètres de déclenchement d'un déclencheur comportant le maximum d'options possibles. Lorsqu'un paramètre est réglé à la valeur désirée, une touche M d'émission provoque la transmission de la donnée correspondante, par l'intermédiaire d'un émetteur 48 du dispositif de télécommande et d'un récepteur 50 disposé sur la face avant du déclencheur. La réception de données par le récepteur 50, connecté au microprocesseur du déclencheur, conduit à la modification du paramètre concerné dans la mémoire 28 et, en conséquence, dans la zone 32 de l'afficheur 30.

Un même boîtier standard de télécommande 44 peut servir à régler successivement plusieurs déclencheurs.

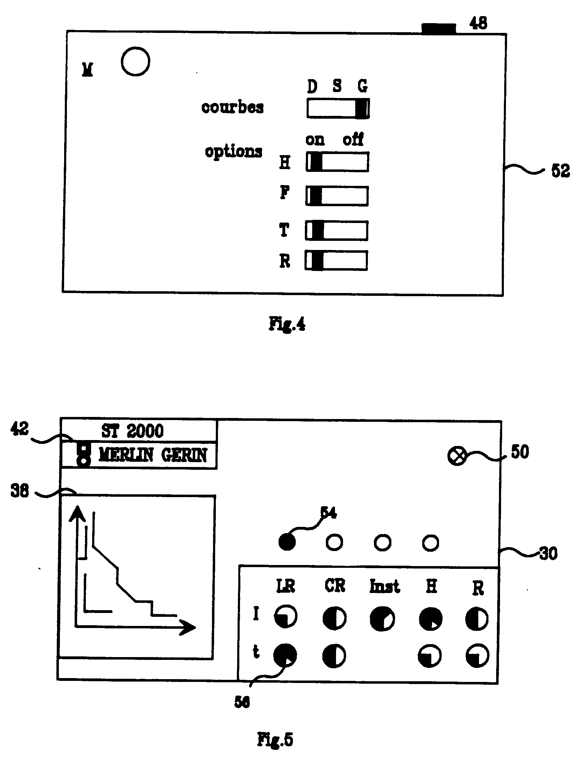

La figure 4 illustre un dispositif de télécommande 52 destiné à configurer le déclencheur, c'est-à-dire à déterminer les options qu'il doit réaliser. Dans le mode de réalisation représenté le dispositif 52 comporte un commutateur à trois positions D, S et G, permettant de sélectionner séparément trois types de courbes. Un certain nombre de commutateurs à deux positions (ON/OFF) permettent, quant à eux, de déterminer si un déclencheur doit ou non comporter des options correspondantes, par exemple une fonction de déclenchement homopolaire (H), la signalisation du type de défaut (F), une fonction de relestage (R).

Comme le dispositif de télécommande 44, le dispositif de télécommande 52 communique avec le déclencheur par l'intermédiaire d'une liaison infrarouge, un émetteur 48 coopérant avec le récepteur 50 du déclencheur.

La configuration du déclencheur est de préférence réalisée en fin de fabrication. Les commutateurs correspondant aux options sélectionnées pour un déclencheur particulier sont mis dans la position ON et la touche M d'émission du dispositif de télécommande est actionnée, provoquant la transmission au déclencheur des données correspondantes. Le microprocesseur du déclencheur met ces données en mémoire, dans la mémoire 28, et utilise ces données mémorisées pour déterminer quels sous-programmes contenus dans la mémoire morte 24 il devra utiliser lors du traitement des données. Les données mémorisées sont également utilisées pour déterminer le type d'informations à afficher. A titre d'exemple, si le déclencheur ne doit pas réaliser de fonction de relestage, le commutateur correspondant à l'option R du dispositif de télécommande étant en position OFF lors de la configuration du déclencheur, la représentation graphique du commutateur R n'apparaît pas dans la zone 32 de l'afficheur. L'utilisateur sait ainsi exactement quelles sont les fonctions réalisées par le déclencheur et l'actionnement du potentiomètre R correspondant du dispositif de télécommande 44 n'a aucune influence sur le déclencheur.

Le choix d'une option peut, par programmation, être rendu irréversible après configuration.

La figure 5 illustre un autre mode de réalisation de l'afficheur 30. Dans ce mode de réalisation, la signalisation des défauts est réalisée au moyen de points 54, disposés en regard des représentations graphiques 56 des potentiomètres correspondants aux différentes fonctions de déclenchement. Sur la figure, le point associé à la fonction long retard est noirci, indiquant qu'un déclenchement long retard a eu lieu.

L'invention n'est pas limitée aux modes de réalisation particuliers représentés sur les figures. En particulier, l'affichage peut également être réalisé par un afficheur à plasma. Les informations qui sont communes à tous les déclencheurs, quel qu'en soit le type, comme le logo et le nom du constructeur ou les coordonnées de courbes de déclenchement, peuvent être intégrée dans l'afficheur à cristaux liquides de manière à être visible en permanence, même en l'absence de batterie. Ceci est réalisé, de manière connue, par interposition sous la face avant de l'afficheur d'une plaque transparente sur laquelle sont imprimées ces informations.

La liaison infrarouge peut également être remplacée par tout autre type de liaison, par exemple par une liaison radio, une liaison à ultrasons, ou même par une ligne bifilaire.

Les dispositifs de télécommande peuvent comporter des touches à la place ou en sus des potentiomètres. Le dispositif de télécommande peut éventuellement être constitué par un microordinateur classique, relié au déclencheur par une ligne bifilaire. Dans ce cas, les données sont sélectionnées et affichées sur le microordinateur et transmises par la ligne au microprocesseur du déclencheur qui les affiche et les utilise ultérieurement pour le traitement. Ce dernier type de télécommande est plus particulièrement approprié pour la configuration du déclencheur en bout de chaîne .

## Revendications

1. Déclencheur électronique comportant un ensemble de traitement électronique, comportant un microprocesseur (22) et au moins une mémoire vive secourue ou une mémoire morte programmable et effaçable électriquement (28), recevant des signaux de sortie de moyens (16,20) de mesure du courant parcourant des conducteurs à protéger et destiné à produire un signal de déclenchement en cas de dépassement par lesdits signaux de paramètres de déclenchement prédéterminés, une face avant comportant des indications relatives au type de déclencheur, des moyens de signalisation d'un défaut et un dispositif d'affichage destiné à afficher les paramètres de déclenchement, déclencheur caractérisé en ce que sa face avant est constituée par un dispositif d'affichage à écran plat (30), contrôlé par le microprocesseur (22) et connecté à une batterie interne de manière à afficher en permanence diverses données contenues dans la mémoire (28) et constituées à la fois au moins par des indications relatives au type de déclencheur (32,38,42), par les paramètres de déclenchement (32) et par la signalisation d'un défaut (40,54), le déclencheur comportant des moyens (50) de réception connectés au microprocesseur et destinés à coopérer avec les moyens d'émission (48) d'un dispositif de télécommande (44) comportant des moyens permettant de modifier à distance les paramètres de déclenchement contenus dans la mémoire (28).

2. Déclencheur selon la revendication 1, caractérisé en ce que le dispositif d'affichage (30) affiche également les valeurs des grandeurs mesurées par le déclencheur (I1,I2,I3,IN,T).

3. Déclencheur selon l'une des revendications 1 ou 2, caractérisée en ce que les indications relatives au type de déclencheur sont introduites dans la mémoire (28) à distance au moyen d'un dispositif de télécommande spécifique (52).

4. Déclencheur selon la revendication 3, caractérisé en ce que les indications relatives au type de déclencheur ne sont pas modifiables ultérieurement, après leur introduction dans la mémoire.

5. Déclencheur selon l'une quelconque des revendications 1 à 4, caractérisé en ce que des indications sont intégrées dans le dispositif d'affichage de manière à être visibles en permanece, même en l'absence de batterie.

6. Déclencheur selon l'une quelconque des revendications 1 à 5, caractérisé en ce que les moyens d'émission (48) du dispositif de télécommande coopérent avec les moyens de réception (50) du déclencheur par l'intermédiaire d'une liaison infrarouge.

7. Déclencheur selon l'une quelconque des revendications 1 à 5, caractérisé en ce que les moyens d'émission (48) du dispositif de télécommande coopérent avec les moyens de réception (50) du déclencheur par l'intermédiaire d'une liaison bifilaire.

8. Déclencheur selon l'une quelconque des revendications précédentes, caractérisé en ce que les données sont affichées sous forme alphanumérique (34,36,42) et/ou sous forme graphique (32,38).

9. Déclencheur selon l'une quelconque des revendications précédentes, caractérisé en ce que le dispositif d'affichage (30) est un dispositif d'affichage à cristaux liquides.

10. Déclencheur selon l'une quelconque des revendications 1 à 8, caractérisé en ce que le dispositif d'affichage (30) est du type à plasma.

## Patentansprüche

1. Elektronischer Auslöser mit elektronischer Verarbeitungsschaltung, die einen Mikroprozessor (22) und mindestens einen gepufferten Schreib-Lese-Speicher oder einen elektrisch löschbaren programmierbaren Festwertspeicher (28) umfaßt, die mit Ausgangssignalen (16, 20) von Meßmitteln zur Erfassung des Stroms beaufschlagt werden, der die zu schützenden Leiter durchfließt und zur Erzeugung eines Auslösesignals bei Überschreiten festgelegter Auslöseparameter durch die genannten Signale dient, wobei an einer Frontseite Angaben zum Auslösertyp, Mittel zur Anzeige eines Fehlers sowie eine Vorrichtung zur Anzeige der Auslöseparameter angebracht sind, dadurch gekennzeichnet, daß die Frontseite des Auslösers als Flachanzeige (30) ausgebildet ist, die über den Mikroprozessor (22) angesteuert wird und an eine interne Batterie angeschlossen ist, so daß sie bestimmte, im Speicher (28) abgelegte und mindestens die Angaben zum Auslösertyp (32, 38, 42), die Auslöseparameter (32) und die Fehlermeldungen (40, 54) umfassende Daten ununterbrochen anzeigt, wobei der Auslöser an den Mikroprozessor angeschlossene Empfangsmittel (50) umfaßt, die dazu dienen, mit Sendemitteln (48) einer Fernbetätigungseinrichtung (44) zusammenzuwirken, welche Mittel aufweist, mit denen die im Speicher (28) abgelegten Auslöseparameter aus der Entfernung verändert werden können.

2. Auslöser nach Anspruch 1, dadurch gekennzeichnet, daß die Flachanzeige (30) des weiteren die Werte der vom Auslöser erfaßten Meßgrößen (I1, I2, I3, IN, T) anzeigt.

3. Auslöser nach Anspruch 1 oder 2, dadurch gekennzeichnet, daß die Angaben zum Auslösertyp mit Hilfe einer speziellen Fernbetätigungseinrichtung (52) aus der Entfernung in den Speicher (28) eingegeben werden.

4. Auslöser nach Anspruch 3, dadurch gekennzeichnet, daß die Angaben zum Auslösertyp nach ihrer Eingabe in den Speicher nicht mehr verändert werden können.

5. Auslöser nach irgendeinem der Ansprüche 1 bis 4, dadurch gekennzeichnet, daß bestimmte Informationen so in die Flachanzeige eingebracht sind, daß sie auch ohne Batteriestrom dauerhaft sichtbar sind.

6. Auslöser nach irgendeinem der Ansprüche 1 bis 5, dadurch gekennzeichnet, daß die Sendemittel (48) der Fernbetätigungseinrichtung mit den Empfangsmitteln (50) des Auslösers über eine Infrarotverbindung zusammenwirken .

7. Auslöser nach irgendeinem der Ansprüche 1 bis 5, dadurch gekennzeichnet, daß die Sendemittel (48) der Fernbetätigungseinrichtung mit den Empfangsmitteln (50) des Auslösers über eine Zweidrahtverbindung zusammenwirken.

8. Auslöser nach irgendeinem der vorhergehenden Ansprüche, dadurch gekennzeichnet, daß die Daten in Form von alphanumerischen Zeichen (34, 36, 42) und/oder graphischen Symbolen (32, 38) angezeigt werden.

9. Auslöser nach irgendeinem der vorhergehenden Ansprüche, dadurch gekennzeichnet, daß die Flachanzeige (30) als Flüssigkristallanzeige ausgeführt ist.

10. Auslöser nach irgendeinem der Ansprüche 1 bis 8, dadurch gekennzeichnet, daß die Flachanzeige (30) als Plasmaanzeige ausgeführt ist.

## Claims

1. An electronic trip device comprising an electronic processing unit, comprising a microprocessor (22) and at least one backed-up random-access memory or an electrically erasable programmable read-only memory (28), receiving output signals from means (16, 20) for measuring the current flowing in conductors to be protected and designed to produce a tripping signal in the event of said signals overshooting preset tripping parameters, a front panel comprising indications relative to the type of trip device, fault indication means, and a display device designed to display the tripping parameters, a trip device characterized in that its front panel is formed by a flat screen display device (30), controlled by the microprocessor (22) and connected to an internal battery so as to give a permanent display of various data contained in the memory (28) and made up at least of indications relating to the type of trip device (32, 38, 42), the tripping parameters (32) and fault indication (40, 54), the trip device comprising receiving means (50) connected to the microprocessor and designed to cooperate with the transmission means (48) of a remote control device (44) comprising means enabling the tripping parameters contained in the memory (28) to be modified remotely.

2. The trip device according to claim 1, characterized in that the display device (30) also displays the values of the quantities measured by the trip device (I1, I2, I3, IN, T).

3. The trip device according to claim 1 or 2, characterized in that the indications relating to the type of trip device are entered in the memory (28) remotely by means of a specific remote control device (52).

4. The trip device according to claim 3, characterized in that the indications relating to the type of trip device are not subsequently modifiable, after they have been entered in the memory.

5. The trip device according to one of the claims 1 to 4, characterized in that indications are integrated in the display device in such a way as to be permanently visible, even in the absence of a battery.

6. The trip device according to one of the claims 1 to 5, characterized in that the transmission means (48) of the remote control device cooperate with the receiving means (50) of the trip device by means of an infra-red link.

7. The trip device according to one of the claims 1 to 5, characterized in that the transmission means (48) of the remote control device cooperate with the receiving means (50) of the trip device by means of a two-wire line.

8. The trip device according to any one of the above claims, characterized in that the data is displayed in alphanumeric form (34, 36, 42) and/or in graphic form (32, 38).

9. The trip device according to any one of the above claims, characterized in that the display device (30) is a liquid crystal display device.

10. The trip device according to one of the claims 1 to 8, characterized in that the display device (30) is of the plasma type.
